## Europäisches Patentamt

## European Patent Office

## Office européen des brevets

(11) Veröffentlichungsnummer: **0 230 531**

**A1**

(12) # EUROPÄISCHE PATENTANMELDUNG

(21) Anmeldenummer: **86114855.9**

(22) Anmeldetag: **25.10.86**

(51) Int. Cl.⁴: **A01D 78/10**

(30) Priorität: **24.12.85 DE 3546041**

(43) Veröffentlichungstag der Anmeldung:
**05.08.87 Patentblatt 87/32**

(84) Benannte Vertragsstaaten:
**AT BE FR GB NL**

(71) Anmelder: **Fella-Werke GmbH**
**Fellastrasse 2**
**D-8501 Feucht(DE)**

(72) Erfinder: **Pürrer, Josef**
**Andreas-Schramm-Strasse 33**
**D-8501 Feucht(DE)**
Erfinder: **Kohl, Bernhard**
**Lerchenweg 11**
**D-8501 Winkelhaid(DE)**

(74) Vertreter: **Patentanwälte Czowalla . Matschkur**
**+ Partner**
**Dr.-Kurt-Schumacher-Strasse 23 Postfach**
**9109**
**D-8500 Nürnberg 11(DE)**

(54) **Heuwerbungsmaschine.**

(57) Die Erfindung richtet sich auf eine Heuwerbungsmaschine, insbesondere zum Schwadlegen, mit mehreren um je eine zur Lotrechten leicht geneigte Achse drehbaren kegelstumpfförmigen Kreiseln mit elastisch verformbaren Werkzeugen, die nebeneinander an einem gegenüber der Arbeitsfläche leicht ansteigenden Tragarm angeordnet sind, sich mit einem Stützteller auf dem Boden abstützen und einen gemeinsamen Antrieb aufweisen, wobei der Tragarm im wesentlichen senkrecht zur Arbeitsrichtung der Maschine verläuft und wobei sich die benachbarten Kreisel überlappen und an einem Ende des Tragarms eine Antriebstrommel angeordnet ist, die mittels übereinander angeordneter Keilriemen mit je einem Kreisel verbunden ist, wobei die Keilriemen einen bandartig verbreiterten Rücken aufweisen und die nebeneinander laufenden Keilriemen eine geschlossene Fläche bilden.

FIG. 1

## Heuwerbungsmaschine

Die Erfindung richtet sich auf eine Heuwerbungsmaschine, insbesondere zum Schwadlegen, mit mehreren um je eine zur Lotrechten leicht geneigte Achse drehbaren kegelstumpfförmigen Kreiseln mit elastisch verformbaren Werkzeugen, die nebeneinander an einem gegenüber der Arbeitsfläche leicht ansteigenden Tragarm angeordnet sind, sich mit einem Stützteller auf dem Boden abstützen und einen gemeinsamen Antrieb aufweisen.

Solche Heuwerbungsmaschinen sind vielfältig verwendbar, außer zum Schwadlegen auch zum Schwadwenden und zum Zetten. Vorbekannte Bauformen bedienen sich vielfach umlaufender Gabeln oder Zinken zum Versetzen des Gutes. Diese unterliegen einer außerordentlich starken Bruchgefahr. Abgebrochene Einzelelemente geraten dann in das Futter oder in eine nachfolgende Maschine und verursachen dort erhebliche Schäden oder gar Verletzungen bei den Tieren. Diese Zinken wirken auch besonders aggressiv auf das zu behandelnde Futter ein, was unerwünscht ist. Eine andere Gattung solcher Heuwerbungsmaschinen bedient sich einer oder mehrerer Trommeln, an deren bodenseitigem Ende ein elastisch verformbarer ringförmiger Kragen angeordnet ist. Diese Trommeln sind im allgemeinen nebeneinander an einem schräg zur Arbeitsrichtung der Maschine verlaufenden Tragarm gelagert, woraus sich eine beachtliche Baulänge ergibt, die insbesondere beim Frontanbau deshalb Schwierigkeiten bereitet, weil dann die gesamte Baulänge von Schlepper und Heuwerbungsmaschine einer Fortbewegung auf der Straße Schwierigkeiten bereitet. Es wäre allerdings höchst unerwünscht, müßte die Heuwerbungsmaschine vor jedem Straßentransport eigens umgerüstet werden. Die Bewegungskreise der einzelnen Trommeln mit ihren Ringkragen tangieren sich, was wiederum Verluste bei der Übergabe des zu bewegenden Gutes hervorruft.

Der Erfindung liegt die Aufgabe zugrunde, bei Heuwerbungsmaschinen der eingangs bezeichneten Gattung die Nachteile der vorbekannten Maschinen auszuschließen und eine Bauart vorzuschlagen, die eine praktisch verlustfreie Arbeit leistet, das Gut höchst schonend behandelt und die vor allem den Straßentransport nicht behindert, also eine besonders gedrungene Bauart erlaubt.

Der Grundgedanke der Erfindung besteht darin, daß der Tragarm im wesentlichen senkrecht zur Arbeitsrichtung der Maschine verläuft, daß sich die benachbarten Kreisel überlappen und daß am einen Ende des Tragarms eine Antriebstrommel angeordnet ist, die mittels übereinander angeordneter Keilriemen mit je einem Kreisel verbunden ist, wobei die Keilriemenrücken bandartig verbreitert sind und die nebeneinander laufenden Keilriemen eine geschlossene Fläche bilden. Der Queranbau eines solchen Geräts vermindert gegenüber den bekannten Heuwerbungsmaschinen die Baulänge erheblich, was sich besonders beim Frontanbau an einem Schlepper bemerkbar macht und zur Folge hat, daß der Schlepper mit angebauter Maschine ohne weiteres im Straßenverkehr Verwendung finden kann. Die Verringerung der Gesamtbaulänge hat außerdem eine bessere Anpassung an Bodenunebenheiten oder Geländeformen zur Folge, und sie trägt wesentlich zur schonenden Behandlung des Gutes bei. Maßgeblich hierfür ist aber vor allem die Überlappung zwischen den einzelnen benachbarten Kreiseln. Dadurch ergibt sich eine weitgehend geschlossene Arbeitsfläche für die Kreiselwerkzeuge. Besonders vorteilhaft hat sich das Merkmal erwiesen, daß die parallel übereinander umlaufenden Keilriemen für den Antrieb der einzelnen Kreisel eine zusätzliche Arbeitsfläche bilden, die die Bewegung des Gutes noch unterstützt.

Es liegt im Rahmen dieses allgemeinen Erfindungsgedankens, daß bei einer solchen Heuwerbungsmaschine die Kreisel eine Rotorscheibe aufweisen, an deren unterem Umfang ein Kranz aus einzelnen elastisch verformbaren Zungen angeordnet ist. Diese Zungen passen sich besonders gut der zu bearbeitenden Fläche an, und sie gestatten ein Auswechseln einzelner Elemente bei einer Beschädigung. Darüber hinaus sind sie besonders kostengünstig gegenüber einem Ringkragen der bekannten Heuwerbungsmaschinen.

Der Durchmesser der Rotorscheibe entspricht etwa dem Durchmesser des Stütztellers des Kreisels, der dadurch eine weitgehende zuverlässige Abstützung auf der zu bearbeitenden Fläche erfährt.

Das Maß der Überlappung benachbarter Kreisel entspricht nach einem weiteren Merkmal der Erfindung etwa dem Abstand von deren Stütztellern. Die Überlappung bemißt sich damit etwa entsprechend der radialen Abmessung der elastisch verformbaren Zungen. Die Überlappung wird begünstigt durch die Neigung der Achse der einzelnen Kreisel und der leichten Neigung des die nebeneinander angeordneten Kreisel aufweisenden Tragarms. Der einzelne Kreisel verläuft dann nicht parallel zum Boden, doch begünstigt die Verformbarkeit der Arbeitswerkzeuge und deren Aufgliederung in einzelne sich überlappende Zungen ein höchst mögliches Maß an Anpassung an die zu bearbeitende Fläche.

Es hat sich als besonders vorteilhaft erwiesen, wenn die Keilriemen der einzelnen Kreiselantriebe einander überlappen und wenn sie schließlich, was die Erfindung weiter vorsieht, an ihrer Rückseite rippen-oder nockenartige Mitnehmer tragen. Dadurch wird die Bewegung des Gutes in der jeweils gewünschten Weise zusätzlich gefördert.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen:

Fig. 1 eine teilweise geschnittene Rückansicht der Maschine;

Fig. 2 eine Draufsicht auf die Maschine;

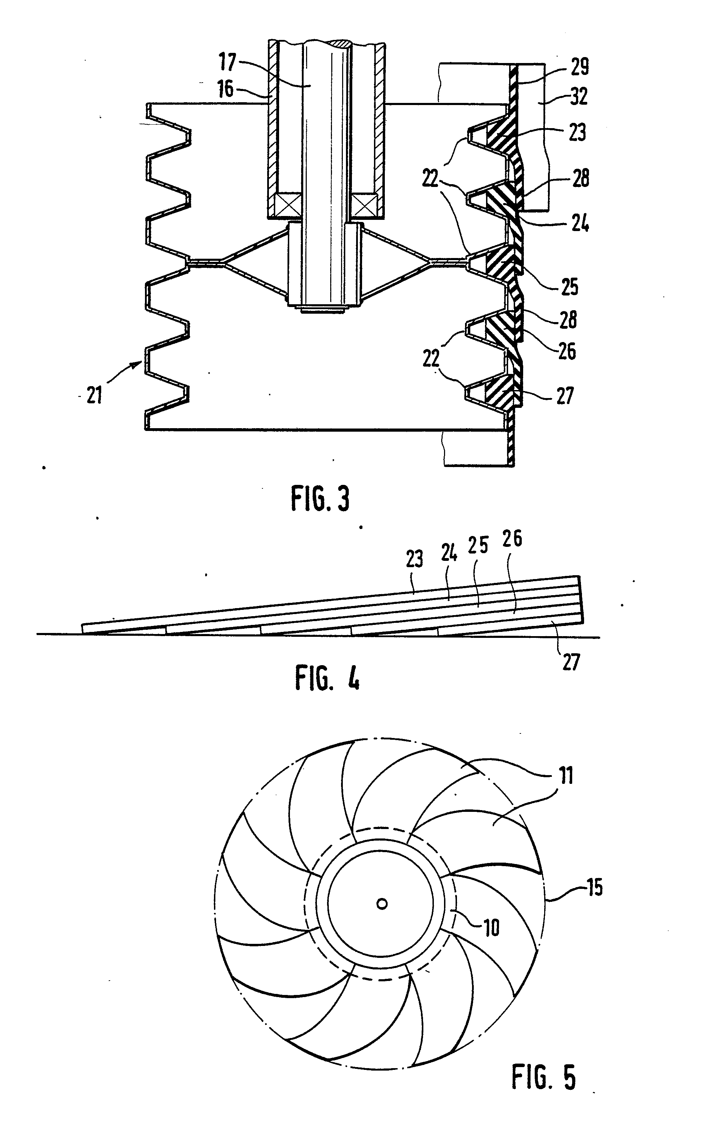

Fig. 3 ein Detail der Antriebstrommel im Schnitt;

Fig. 4 eine schematisierte Ansicht der Maschine in Pfeilrichtung IV und

Fig. 5 eine Draufsicht auf einen Kreisel.

Die Maschine weist einen Tragrahmen 1 auf, der über die Winkelstücke 2 mit den Stützen 3 eines Tragbockes 4 verbunden ist. Dieser dient der in Einzelheiten nicht wiedergegebenen Aufhängung der Maschine an einem Schlepper. Er lagert außerdem den Antriebskopf 5, an den die Zapfwelle des Schleppers angreift. An dem Tragarm 1 sind bei der wiedergegebenen Ausführungsform fünf Kreisel 6 nebeneinander angeordnet. Jeder Kreisel 6 ist mittels eines freilaufenden Tellers 7 auf dem Niveau 8 abgestützt. Oberhalb des Stütztellers 7 befindet sich eine mit der angetriebenen Riemenscheibe 9 verbundene Rotorscheibe 10. Am Außenumfang dieser Scheibe 10 ist eine Vielzahl von zungenartigen Werkzeugelementen 11 befestigt, die sich im Drehsinn (Pfeil 12) des Kreisels 6 überlappen. Die Drehachse 13 des Kreisels 6 verläuft leicht geneigt zur Lotrechten. Den gleichen Anstellwinkel 14 weist der Außenumfang 15 der zungenartigen Arbeitswerkzeuge 11 eines jeden Kreisels 6 auf.

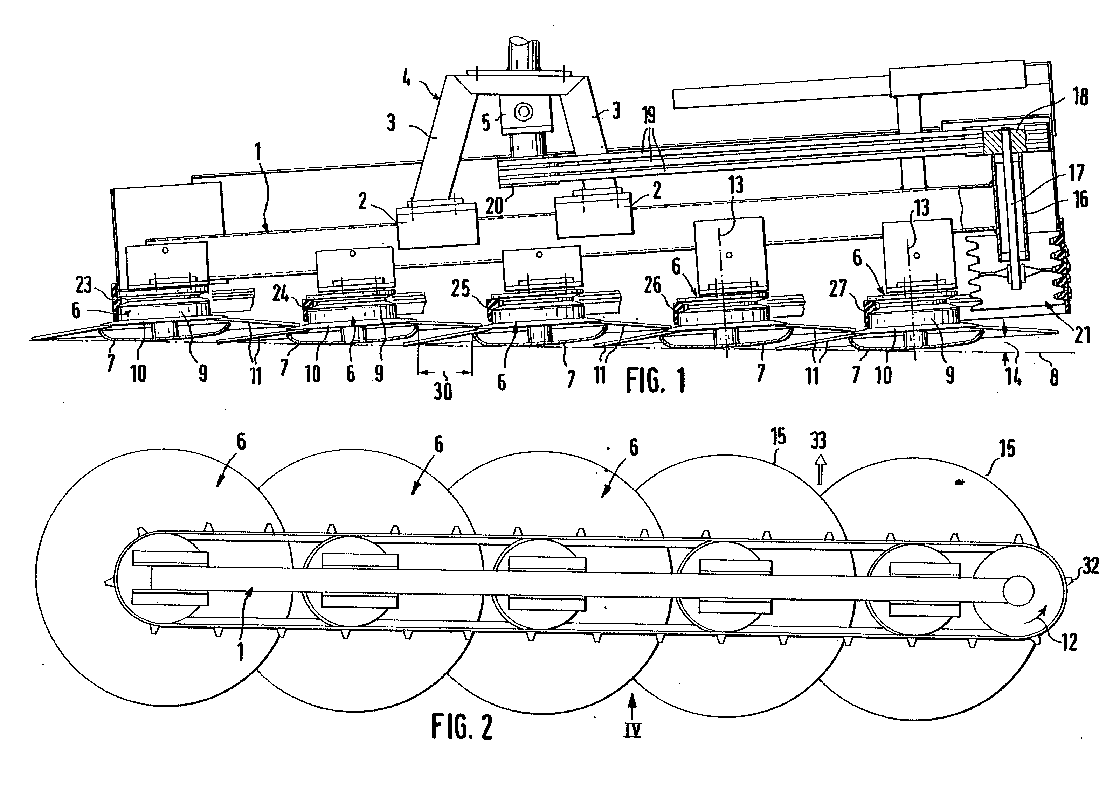

Am äußeren Ende des Tragarms 1 ist in einer Buchse 16 eine Welle 17 gelagert, die an ihrem oberen Ende eine Keilriemenscheibe 18 trägt, die über einen oder mehrere Keilriemen 19 mit einer entsprechenden Keilriemenscheibe 20 des Antriebskopfes 5 verbunden ist. Am unteren Ende der Welle 17 ist eine Keilriementrommel 21 angeordnet, die ebenso viele Keilnuten 22 aufweist, wie Kreisel 6 nebeneinander an dem Tragarm 1 angeordnet sind. Die Welle 17 verläuft achsparallel zu den Achsen 13 der einzelnen Kreisel 6. In jeder Keilnut 22 ist ein Kielriemen 23,24,25, 26,27 gelagert. Der unterste Keilriemen 27 ist dem nächstliegenden Kreisel 6 zugeordnet. Der jeweils nächst höhere Keilriemen 26,25,24,23 führt zum jeweils nächsten an dem Tragarm 1 ange brachten Kreisel 6. Die Keilriemen 23 -27 weisen einen bandartig verbreiterten Rücken 28 auf, und jeder Keilriemen 23 -27 überlappt mit seinem bandartigen Rücken den parallel darunter verlaufenden weiteren Keilriemen, so daß sich eine geschlossene Arbeitsfläche ergibt, deren Muster in Fig. 4 dargestellt ist. Der obere Keilriemen 23 kann, wie dies Fig. 1 erkennen läßt, auch nach der oberen Seite hin eine bandartige Verbreiterung 29 tragen.

Aus den Fig. 1 und 2 geht hervor, daß die Rotorscheibe 10 und der Stützteller 7 etwa den gleichen Umfang aufweisen und die zungenartigen Arbeitswerkzeuge 11 um im wesentlichen ihre gesamte freitragende Länge den Stützteller 7 nach außen überragen. Um etwa diese Länge, die auch im wesentlichen dem Abstand 30 der Stützteller 7 benachbarter Kreisel 6 entspricht, ggf. auch etwas darüber hinaus, überlappen sich die Kreisel 6, deren Peripherie mit 15 bezeichnet ist. Zu diesem Zweck sind die einzelnen Kreisel 6 bzw. ihre Riemenscheiben 9 jeweils um das gleiche Maß des Abstandes der Keilriemen 23 -27 nach oben gegenüber dem Tragarm 1 versetzt an diesem angeordnet.

Bei der in Fig. 2 wiedergegebenen Ausführungsform tragen die Keilriemen 23 -27 außenseitige Nocken 32.

## Ansprüche

1. Heuwerbungsmaschine, insbesondere zum Schwadlegen, mit mehreren um je eine zur Lotrechten leicht geneigte Achse drehbaren Kreiseln mit elastisch verformbaren Werkzeugen, die nebeneinander an einem gegenüber der Arbeitsfläche leicht ansteigenden Tragarm angeordnet sind, sich mit einem Stützteller auf dem Boden abstützen und einen gemeinsamen Antrieb aufweisen, dadurch gekennzeichnet, daß der Tragarm im wesentlichen senkrecht zur Arbeitsrichtung (33) der Maschine verläuft, daß sich die benachbarten Kreisel(6) überlappen und daß an einem Ende des Tragarms (1) eine Antriebstrommel (21) angeordnet ist, die mittels übereinander angeordneter Keilriemen (23-27) mit je einem Kreisel (6) verbunden ist, wobei die Keilriemen (23-27) einen bandartig verbreiterten Rücken (28) aufweisen und die nebeneinander laufenden Keilriemen (23-27) eine geschlossene Fläche bilden.

2. Heuwerbungsmaschine nach Anspruch 1, dadurch gekennzeichnet, daß die Kreisel (6) eine Rotorscheibe (10) aufweisen, an deren Umfang ein Kranz aus einzelnen elastisch verformbaren Zungen (11) angeordnet ist.

3. Heuwerbungsmaschine nach Anspruch 1 und 2, dadurch gekennzeichnet, daß der Durchmesser der Rotorscheibe (10) etwa dem Durchmesser des Stütztellers (7) entspricht.

4. Heuwerbungsmaschine nach einem der Ansprüche 1 bis 3, dadurch gekennzeichnet,daß das Maß der Überlappung benachbarter kreisel (6) etwa dem Abstand (30) von deren Stütztellern (7) entspricht.

5, Heuwerbungsmaschine nach einem der Ansprüche 1 bis 4, dadurch gekennzeichnet,daß die einzelnen Kreisel (6), von der Antriebstrommel (21) her gesehen, gegeneinander nach oben versetzt an dem Tragarm (1) angeordnet sind.

6. Heuwerbungsmaschine nach einem der Ansprüche 1 bis 5, dadurch gekennzeichnet, daß die Keilriemen (23-27) einander überlappen.

7. Heuwerbungsmaschine nach einem der Ansprüche 1 bis 6, dadurch gekennzeichnet, daß die Keilriemen (23-27) an ihrer Außenseite rippen-oder nockenartige Mitnehmer (32) tragen.

FIG. 1

FIG. 2

FIG. 3

FIG. 4

FIG. 5

## Europäisches Patentamt

# EUROPÄISCHER RECHERCHENBERICHT

Nummer der Anmeldung

| | EINSCHLÄGIGE DOKUMENTE | | EP 86114855.9 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>DE - A1 - 2 843 782</u> (SAMIBEM S.A.)<br>* Gesamt *<br><br>-- | 1,2 | A 01 D 78/10 |
| A | <u>DE - A1 - 2 843 775</u> (SAMIBEM S.A.)<br>* Gesamt *<br><br>-- | 1 | |
| A | <u>EP - A1 - 0 116 532</u> (JETZINGER)<br>* Fig. 1 *<br><br>---- | 1 | |

| | RECHERCHIERTE SACHGEBIETE (Int. Cl.4) |
|---|---|
| | A 01 D 34/00 |
| | A 01 D 78/00 |
| | A 01 D 80/00 |
| | A 01 D 84/00 |

Der vorliegende Recherchenbericht wurde für alle Patentansprüche erstellt.

| Recherchenort | Abschlußdatum der Recherche | Prüfer |
|---|---|---|
| WIEN | 08-04-1987 | RIEMANN |